# EUROPEAN PATENT APPLICATION

(11) **EP 1 669 948 A2**
(43) Date of publication of application: **14.06.2006**
(21) Application number: 05026836.6
(22) Date of filing: 08.12.2005
(51) Int. Cl.: G07F 17/32

(54) **Gaming system**

(30) Priority: 10.12.2004 JP 2004357611
(71) Applicant: Aruze Corp., Tokyo 135-0063 (JP)
(72) Inventor: Okada, Kazuo, Tokyo 135-0063 (JP)
(74) Representative: HOFFMANN EITLE

(57) **Abstract**

In the gaming system (100) constructed from plural slot machines (1), the slot machine (1) is provided with the transmission device, thereby the match can be conducted through mutual transmission. The winning combination lottery table used in the match game over plural slot machines (1) has the winning combination through which points corresponding to obtaining of the winning combination are given to the player's own slot machine and the winning combination through which points corresponding to obtaining of the winning combination by the player's own slot machine are given to the other slot machine of opponent. And even if the winning combination is won by the player's won slot machine, there occurs a case that points are given to the opponent, thereby variability occurs in the match result.

## Description

### BACKGROUND OF THE INVENTION

### 1. Field of the Invention

The present invention relates to a gaming system, and particularly to a gaming system capable of providing a match over a network, and to a gaming machine used in the gaming system.

### 2. Description of Related Art

Gaming systems that enable a match between a plurality of players are now popular. A configuration is generally adopted in a gaming system capable of this type of match in which an award is provided to the winner of the match game based on the results of the match game played between a plurality of gaming machines.

For example, Japanese Unexamined Patent Publication No. 2001-104539 describes a gaming machine capable of the type of match described above, and a method for displaying a gaming state in the gaming machine. This gaming machine is a so-called Japanese pachi-slot gaming machine in which a player designates another player, and both players are transferred to a bonus game, whereby a match-style game can be executed between the player and the other player.

However, in the gaming machine described in Japanese Unexamined Patent Publication No. 2001-104539, a bonus game is performed as the match game. The winner is also determined based on the number of medals acquired during the bonus game, the number of 15-pay symbols, and the number of 10-pay symbols.

Since the gaming machine described in Japanese Unexamined Patent Publication No. 2001-104539 is a Japanese pachi-slot gaming machine, the number of medals acquired, the number of 15-pay symbols, and the number of 10-pay symbols increase with the skill of the player. Therefore, the player who is proficient at the Japanese pachi-slot machine game can enjoy the pleasure of winning along with the interest of match-style play.

A loser is also present, and this player who loses the game can execute the match-style game, but experiences the humiliation of defeat.

In a case that a player who is inexperienced in techniques for the Japanese pachi-slot game, matches a player who is well-experienced in techniques for the Japanese pachi-slot machine, the former experiences the humiliation of defeat with high possibility in the match game. As a result, the inexperienced player concludes to avoid the match game in the gaming machine, thus there is a problem that the match game becomes an object of interest which only a part of well-experienced players can enjoy.

Further, as mentioned in the above, if it occurs situation that the match game is occupied by a part of well-experienced players, players having desire to newly participate in the match game hesitate to participate in the match game. Therefore, all of players cannot enjoy interest of the match game.

### SUMMARY OF THE INVENTION

In order to dissolve the above problems, the present invention has been done and has an object to provide a gaming system in which variability of a match result is given to the match game, thereby all of players can enjoy interest for the match game and to provide a gaming machine utilized in the gaming system.

In order to accomplish the above object, according to one aspect of the present invention, it is provided a gaming system comprising a plurality of gaming machines, each of the gaming machines comprising:
a communication device for communicating with another gaming machine constructing the gaming system;
a lottery device for conducting a lottery of an outcome in which an award and an object gaming machine to which the award is given are corresponded; and
a game control device for giving the award to the object gaming machine based on a lottery result by the lottery device

According to the gaming system, in which a plurality of gaming machines are provided, since the lottery device conducts a lottery of an outcome in which an award and an object gaming machine to which the award is given are corresponded, the award is not always given to the gaming machine when the outcome is won. Therefore, it will occur a case that the award is given to another gaming machine. Thus, variability can occur in a game result, and even if a skill-less player plays the game, interest in the game can be enjoyed.

The above and further objects and novel features of the invention will more fully appear from the following detailed description when the same is read in connection with the accompanying drawings. It is to be expressly understood, however, that the drawings are for purpose of illustration only and not intended as a definition of the limits of the invention.

### BRIEF DESCRIPTION OF THE DRAWINGS

The accompanying drawings, which are incorporated in and constitute a part of this specification illustrate embodiments of the invention and, together with the description, serve to explain the objects, advantages and principles of the invention.

In the drawings,
Fig. 1 is an external perspective view of the gaming system according to the embodiment;
Fig. 2 is an external perspective view of a slot machine constituting the gaming system according to the embodiment;
Fig. 3 is a diagram showing an example of the symbols drawn on the peripherals of the reels in the slot machine according to the embodiment;
Fig. 4 is a block diagram showing the control system for the slot machine according to the embodiment;
Fig. 5 is a block diagram of the liquid crystal drive circuit of the slot machine according to the embodiment;
Fig. 6 is a flowchart of the main processing program of the slot machine according to the embodiment;
Fig. 7 shows the communication routine program of the slot machine according to the embodiment;
Fig. 8 is a flowchart of the start receiving routine program of the slot machine according to the embodiment;
Fig. 9 is a flowchart of the match routine program of the slot machine according to the embodiment;
Fig. 10 is a flowchart of the match completion condition monitoring program of the slot machine according to the embodiment;
Fig. 11 is a flowchart of the lottery routine program of the slot machine according to the embodiment;
Figs. 12 (a) and (b) are diagrams showing the winning combination lottery tables used in the match game in the slot machine according to the embodiment, Fig. 12 (a) shows the winning combination lottery table used in slot machine (red); and Fig. 12 (b) shows the winning combination lottery table used in slot machine (blue);
Fig. 13 is a flowchart of the match game routine program of the slot machine according to the embodiment;
Fig. 14 is a flowchart of the winning award provision routine program of the slot machine according to the embodiment;
Fig. 15 is a diagram of the winning award determination table used during the match game in the slot machine according to the embodiment;
Fig. 16 is a diagram of the winning combination lottery table used in a single-player normal game in the slot machine according to the embodiment; and
Fig. 17 is a flowchart of the game routine program of the single-player normal game in the slot machine according to the embodiment.

### DETAILED DESCRIPTION OF THE PREFERRED EMBODIMENTS

The gaming system of the present invention will be described in detail hereinafter with reference to the drawings based on the embodiment in which a slot machine is used as a specific example of the gaming machine constituting the gaming system.

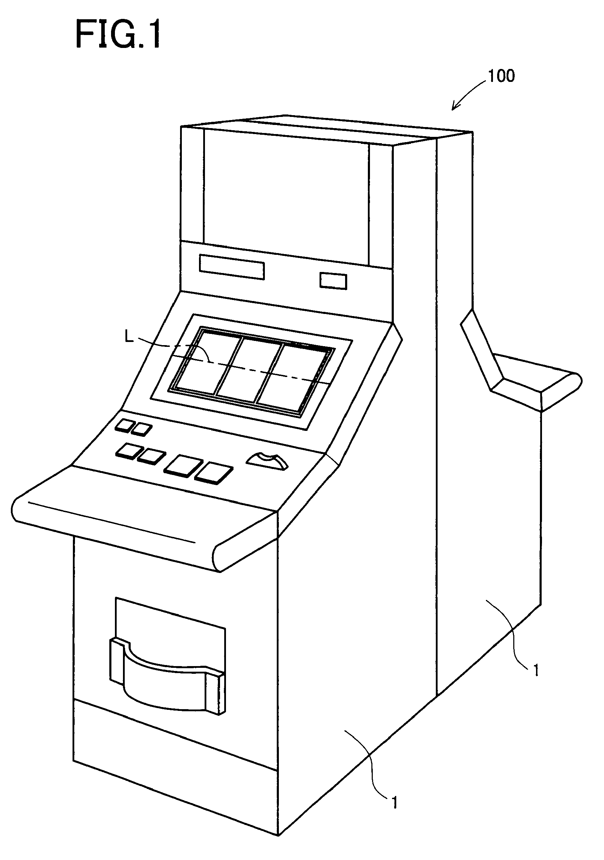

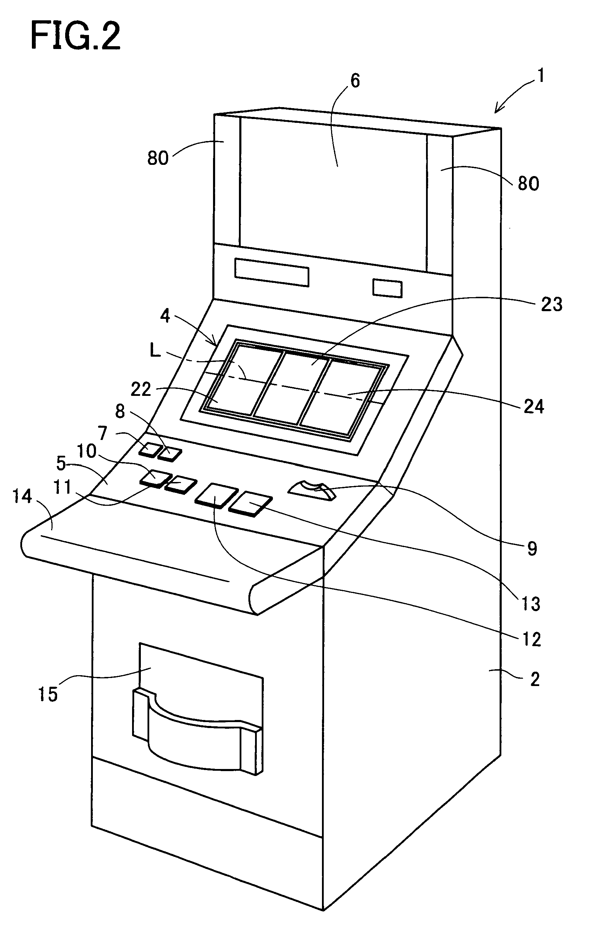

First, the gaming system 100 according to the embodiment, and the schematic structure of a slot machine used in the gaming system 100 will be described based on Figs. 1 and 2. Fig. 1 is a diagram showing an example of the structure of the gaming system according to the present embodiment; and Fig. 2 is a perspective view of the slot machine constituting the gaming system.

The gaming system 100 according to the present invention can be configured using multiple slot machines 1, but a gaming system 100 configured using two slot machines 1 will be described as a specific example in order to more clearly describe the present invention.

The arrangement of the slot machines 1 of the gaming system according to the present invention is not particularly limited, and the embodiment will be described using a configuration in which two slot machines 1 are placed against each other back-to-back.

The two slot machines 1 each have a communication device 90 described hereinafter, and are configured so as to be capable of a network match-style game via the communication device 90. These slot machines 1 also have the same basic structure.

The slot machines 1 according to the embodiment each have a color designated for indicating the slot machine 1. In the embodiment, "red" is set for the slot machine 1 placed on the near side in Fig. 1, and "blue" is set for the slot machine 1 placed on the opposite side.

The cabinets 2 constituting the slot machines 1 are colored in the colors indicating the slot machines 1, and a player can identify the color indicating the slot machine 1 he or she is using from the appearance of the slot machine 1.

The slot machines 1 constituting the gaming system 100 according to the embodiment will be described with reference to Figs. 2 through 4 using the slot machine 1 (for which the color indicating the slot machine is set to "red") placed at the front in Fig. 1 as an example.

The slot machine 1 according to the embodiment is a so-called slant-type slot machine which is a gaming machine that can be used by a seated player. The slot machine 1 has a cabinet 2 for forming its overall shape, and a front panel 6 is formed at the top of the cabinet 2. Speakers 80 for issuing sound effects and the like relating to the slot machine 1 game are also mounted to the left and right of the front panel 6. The form of the outcome relating to the slot machine 1 and a display of points that can be obtained according to the outcome are formed in the center portion of the front panel 6.

A liquid crystal display 4 is mounted to the front of the cabinet 2 as shown in the center of the slant face. This liquid crystal display 4 is composed of a so-called transparent liquid crystal display, and is basically used as the gaming area for the game in the slot machine 1. As shown in Figs. 1 and 2, three variable displays 22, 23, and 24 are formed in the center portion of the liquid crystal display 4.

An operating table 5 gradually tilted forward is provided at the lower part of the liquid crystal display 4. A payout button 7 and a help button 8 are placed rearwards in the operating table 5, and a coin insertion slot 9 is provided on the right side of the help button 8. A match button 10, a 1-BET button 11, a spin (SPIN/REPEAT BET) button 12, and a MAX-BET button 13 are placed on the frontward side of the operating table 5.

The payout button 7 is a button that is pushed when the match game described hereinafter is completed, and when the payout button 7 is pushed, coins remaining as credit at the time the match game is completed are paid out from a payout opening 15.

The match game in the embodiment is a game in which outcomes are obtained within a certain period of time, and a win is determined by the amount of the total value of the points acquired. Credit as an award is provided to the winning player of the match game according to the difference between his or her own total point and the total point of the match opponent.

Therefore, at the end of the match game, the payout button 7 is pushed in order to convert the credit into coin. A payout switch 63 described hereinafter is attached to the payout button 7, and a switch signal is outputted to the CPU 50 based on the pushing of the payout button 7.

The help button 8 is a button pushed when the operating method or the like of the game is unclear, and when the help button 8 is pushed, various types of help information are displayed on the liquid crystal display 4. A help switch 64 described hereinafter is attached to the help button 8, and a switch signal is outputted to the CPU 50 from the help switch 64 based on the pushing of the help button 8.

A coin sensor 65 described hereinafter is placed in the coin insertion slot 9, and when a coin is inserted into the coin insertion slot 9, a coin detection signal is outputted to the CPU 50 via the coin sensor 65.

The match button 10 in the gaming system 100 according to the embodiment is a button pushed when a match-style game is performed with another slot machine 1. A match switch 57 described hereinafter is attached to the match button 10. When the match button 10 is pushed, a signal is issued based on this pushing from the match switch 57 to the CPU 50, and a match flag is stored in RAM 52.

The 1-BET button 11 is a button whereby a bet is placed each time the button is pushed. A 1-BET switch 59 described hereinafter is attached to this 1-BET button 11, and when the 1-BET button 11 is pushed, a switch signal is outputted based on this pushing from the 1-BET switch 59 to the CPU 50.

In the same manner, the MAX-BET button 13 is a button for performing a game for the maximum number of bets (three bets in the embodiment) that can be placed with a single operation of the bet button in the slot machine 1 according to the embodiment. A 3-BET switch 60 is attached to the MAX-BET button 13. The 3-BET switch 60 outputs a switch signal to the CPU 50 based on the pushing of the MAX-BET button 13.

The spin button 12 is a button for initiating the variable displays of symbols in the variable displays 22 through 24 of the liquid crystal display 4 in order to start a game based on the pushing of the spin button 12 according to the present bet amount and the previous bet amount. A spin switch 58 described hereinafter is attached to the spin button 12, and when the spin button 12 is pushed, a switch signal is outputted based on this pushing from the spin switch 58 to the CPU 50.

An armrest 14 having a substantially horizontal face is formed on the frontward side of the operating table 5. This armrest 14 is configured so that when a player seated in a chair (not shown in the diagram) is playing the game, the player can rest his or her arms on the armrest 14 and easily operate the operating table 5.

The payout opening 15 is provided at the bottom of the cabinet 2. A coin detector 73 described hereinafter composed of a sensor or the like is mounted inside the payout opening 15, and the coin detector 73 detects the number of coins paid out from the payout opening 15.

The liquid crystal display 4 is mounted in the center of the front face of the cabinet 2 of the slot machine 1, and variable displays 22 through 24 are formed therein, as previously described. The variable displays 22 through 24 are configured as transparent areas in which the visibility with respect to the inside of the cabinet 2 is maintained.

Three reels R are mounted inside the cabinet 2 behind the liquid crystal display 4. These three reels R are mounted in parallel inside the cabinet 2, and each reel is supported so as to be able to rotate independently. The reels R are also mounted so as to face the variable displays 22 through 24.

Specifically, the liquid crystal display 4 is designed so that the three reels R are positioned facing forward, and the symbol columns 41 through 43 drawn on the peripheral faces of the reels R are visible via the variable displays 22 through 24. In the slot machine 1 according to the embodiment, a single-player normal game described hereinafter and a match game with a slot machine 1 used by another player are performed using the three reels R.

The active pay line L (see Figs. 1 and 2) of the slot machine 1 is drawn in the center portion of the variable displays 22 through 24.

The reels R will be described. Among the three reels R, the reel R on the left side as viewed from the front of the slot machine 1 faces the variable display 22 (see Fig. 2) formed in the liquid crystal display 4, and the center reel R faces the variable display 23 (see Fig. 2) formed in the liquid crystal display 4 in the same manner. The reel R on the right side faces the variable display 24 (see Fig. 2) formed in the liquid crystal display 4.

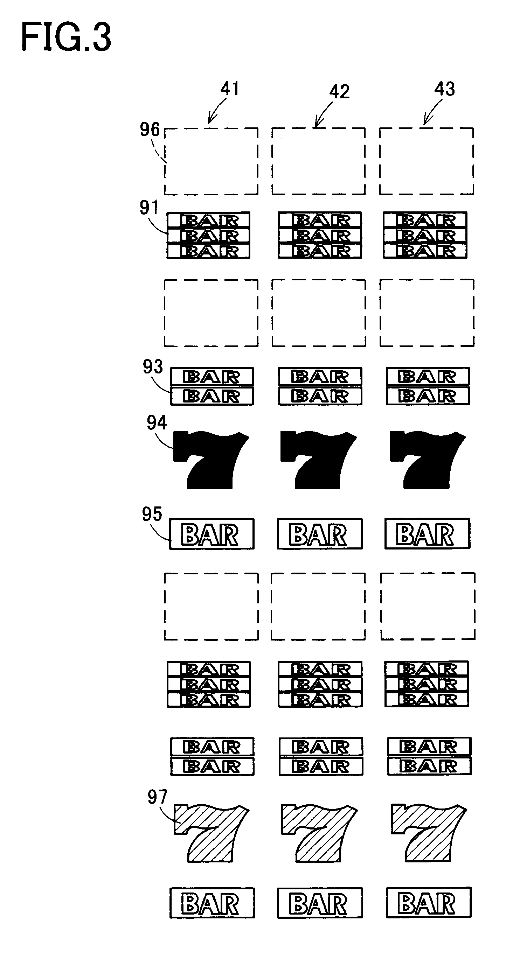

Various types of symbols (see Fig. 3) used in the single-player normal game and two-player match game described hereinafter are formed on the peripheral faces of the reels R. In this arrangement, the symbol columns 41 is a series of symbols drawn on the peripheral face of the reel R on the left side that can be variably displayed in the variable display 22, the symbol column 42 is a series of symbols drawn on the peripheral face of the reel R in the center that can be variably displayed in the variable display 23, and the symbol column 43 is a series of symbols drawn on the peripheral face of the reel R on the right side that can be variably displayed in the variable display 24.

The symbol columns 41 through 43 have the same series of symbols, and these symbol columns are formed from eleven symbols consisting of a triple BAR 91, a double BAR 93, a red seven 94, a single BAR 95, a blank 96, and a blue seven 97 in an arbitrary combination. The blank 96 is an area in which there is no symbol present.

When the symbol columns 41 through 43 scrolling in the variable displays 22 through 24 are stopped, three symbols are each stopped and displayed in the center portions of their respective variable displays. Various types of winning combinations are set in advance in the slot machine 1 based on a plurality of types of combinations of the symbols, and points (hereinafter referred to as points) in the game are added when a combination of symbols corresponding to a winning combination stops on the active pay line L.

The method of forming the various symbols on the peripheral faces of the reels R generally involves printing various symbols on an elongated reel sheet having the same width and length dimensions as the reel R, an affixing a reel sheet to the peripheral face of each reel R, but the symbols may, of course, be formed by another method.

A communication device 90 used for performing a match-style game between slot machine 1 and another slot machine 1 is mounted inside the cabinet 2. This communication device 90 is capable of sending and receiving data from a communication device 90 mounted in another slot machine 1, and performs wireless transmission and reception of data in the embodiment.

In the embodiment, sending and receiving of data by the communication device 90 is performed wirelessly, but an embodiment is also possible in which the slot machines 1 are connected by a cable or the like, and data are transmitted and received over a wire.

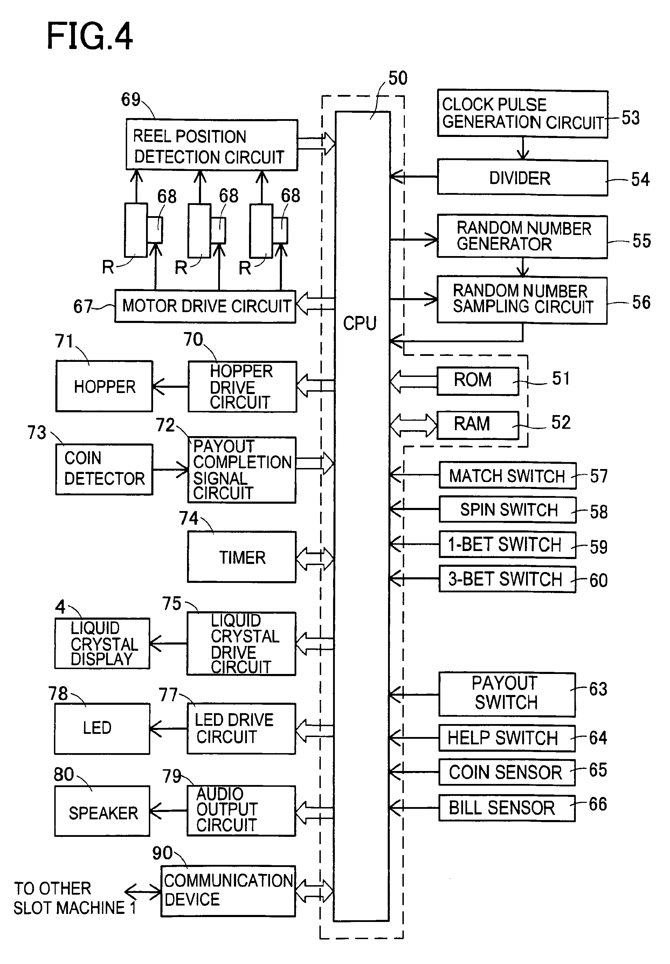

The structure of the control system of the slot machine 1 will next be described based on Fig. 4. Fig. 4 is a schematic block diagram of the control system of the slot machines.

In Fig. 4, the control system of the slot machine 1 is basically structured around the CPU 50, and ROM 51 and RAM 52 are connected to the CPU 50. The main routine program, the normal game routine program, the match routine program, various effect programs for creating various effects in the liquid crystal display 4 as the game progresses, and the lottery table for performing a lottery of the stopped display symbols of the normal game described hereinafter, as well as various programs, data tables, and the like necessary for controlling the slot machine 1 are stored in the ROM 51. The RAM 52 is memory for temporarily storing flags and various types of data computed by the CPU 50.

A clock pulse generation circuit 53 for generating a reference clock pulse and a divider 54 are connected to the CPU 50, and a random number generator 55 and random number sampling circuit 56 are also connected thereto. A random number sampled via the random number sampling circuit 56 is used for various type lotteries for determining winning combinations, effects, and the like. The match switch 57 attached to the match button 10, the spin switch 58 attached to the spin button 12, the 1-BET switch 59 attached to the 1-BET button 11, the 3-BET switch 60 attached to the MAX-BET button 13, the payout switch 63 attached to the payout button 7, and the help switch 64 attached to the help button 8 are each connected to the CPU 50. The CPU 50 performs control in order to execute various operations corresponding to each button based on the switch signal outputted from each switch when the corresponding button is pushed.

A timer 74 for measuring a predetermined period of time (three minutes, for example) in a match game to determine which player acquires the most points in a predetermined period of time is also connected to the CPU 50. This timer 74 begins measuring time simultaneously with the timer 74 of the match opponent slot machine 1 based on a timer synchronization signal described hereinafter.

Three stepping motors 68 for rotating the reels R via a motor drive circuit 67 are connected to the CPU 50, and a reel position detection circuit 69 is also connected thereto. When a motor drive signal is outputted from the CPU 50 to the motor drive circuit 67, the stepping motors 68 are rotationally driven by the motor drive circuit 67. The reels R are thereby rotated.

At this time, after the reels R have begun to rotate, the number of drive pulses fed to each of the stepping motors 68 is calculated, and the calculated values are written in a predetermined area of the RAM 52. A reset pulse is outputted from each reel R for each rotation thereof, and the reset pulses are inputted to the CPU 50 via the reel position detection circuit 69. When a reset pulse is inputted to the CPU 50 in this manner, the calculated value written in the RAM 52 is cleared to "0," and the CPU 50 recognizes the rotational position of the symbol in each reel R based on the calculated value corresponding to the rotational position in the range of a single rotation of each reel R and a symbol table in which the rotational position of each reel R stored in the ROM 51 is correlated with the symbol formed on the peripheral face of each reel R.

The coin sensor 65 disposed in the coin insertion slot 9 is also connected to the CPU 50. The coin sensor 65 detects coins inserted from the coin insertion slot 9, and the CPU 50 computes the number of coins deposited based on the coin detection signal outputted from the coin sensor 65. The number of coins thus computed is converted into credit used for the single-player normal game and match-style game in the slot machine 1.

A hopper 71 is also connected to the CPU 50 via a hopper drive circuit 70. When a drive signal is outputted from the CPU 50 to the hopper drive circuit 70, the hopper 71 pays out a predetermined number of coins from the payout opening 15.

A coin detector 73 is connected to the CPU 50 via a payment completion signal circuit 72. The coin detector 73 is disposed inside the payout opening 15, and when it is detected that the predetermined number of coins have been paid out from the payout opening 15, a coin payment detection signal is outputted from the coin detector 73 to the payment completion signal circuit 72, and the payment completion signal circuit 72 outputs a payment completion signal to the CPU 50 based on this signal. The liquid crystal display 4 is connected to the CPU 50 via a liquid crystal drive circuit 75, and the liquid crystal display 4 is controlled by the CPU 50.

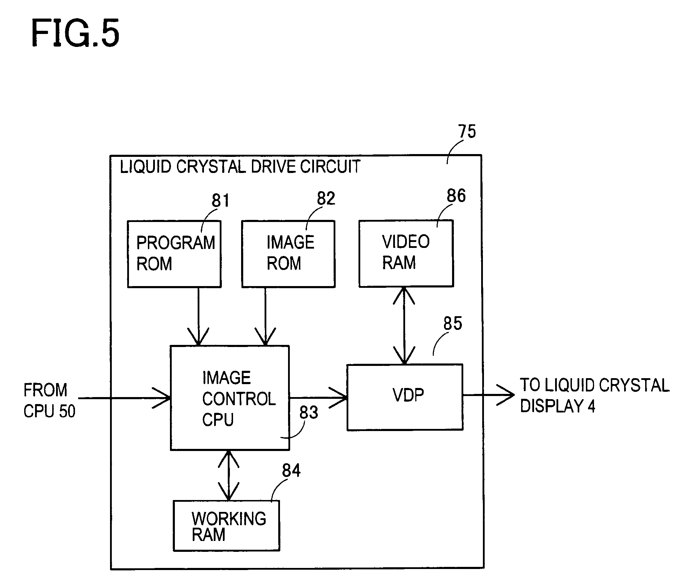

As shown in Fig. 5, the liquid crystal drive circuit 75 is composed of program ROM 81, image ROM 82, an image control CPU 83, working RAM 84, a VDP (Video Display Processor) 85, video RAM 86, and the like. An image controlling program or various selection tables relating to what is displayed in the liquid crystal display 4 are stored in the program ROM 81. Dot data for forming an image displayed on the liquid crystal display 4 are stored in the image ROM 82. The image control CPU 83 determines the image displayed on the liquid crystal display 4 based on a parameter set by the CPU 50 from the dot data stored in advance in the image ROM 82 according to an image control program stored in advance in the program ROM 81. The working RAM 84 is configured as a temporary storage means for when the image control program is executed by the image control CPU 83. The VDP 85 forms an image according to the display content determined by the image control CPU 83 and outputs the image to the liquid crystal display 4. The video RAM 86 is configured as a temporary storage means for when the image is formed by the VDP 85.

An LED 78 is also connected to the CPU 50 via an LED drive circuit 77. Numerous LED 78 are mounted in the front face of the slot machine 1, and the lighting thereof is controlled by the LED drive circuit 77 based on a drive signal from the CPU 50 when various effects are displayed. An audio output circuit 79 and the speakers 80 are connected to the CPU 50, and the speakers 80 generate various sound effects to create various effects based on the output signal from the audio output circuit 79.

The communication device 90 is connected to the CPU 50. The communication device 90 wirelessly transmits results computed by the CPU 50 to the other slot machine 1 (the slot machine 1 on the "blue" side in the embodiment) constituting the gaming system 100, and wirelessly receives the computation results of the other slot machine 1. When computation results are received from the other slot machine 1, the CPU 50 stores the computed results in the RAM 52, and uses the results to control the receiving slot machine 1 (the slot machine I on the "red" side).

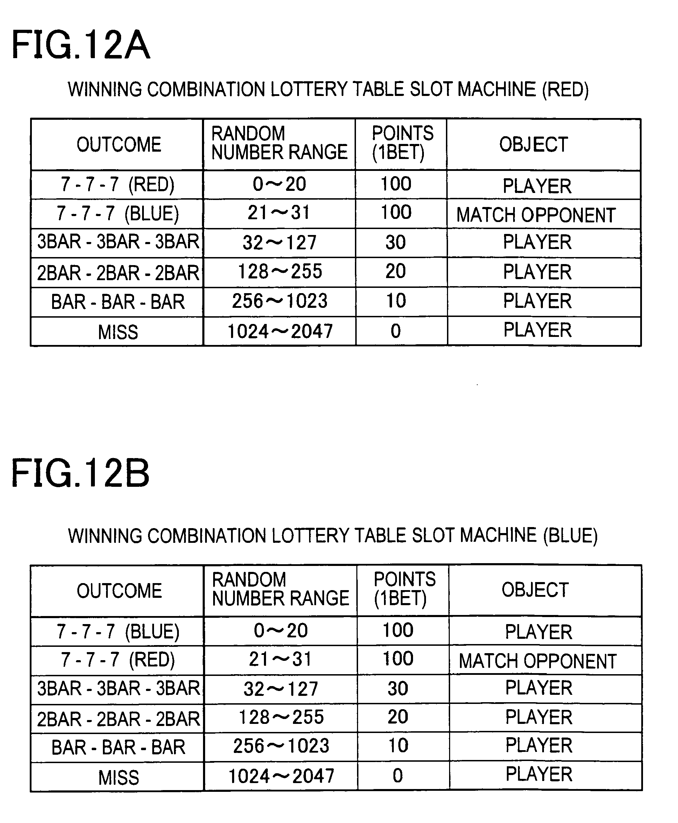

The lottery table used to determine all of the symbols that are stopped and displayed on the active pay line L; specifically, the winning combination, when a game is performed using the three variable displays 22 through 24 in the slot machine 1 will be briefly described based on Fig. 12. Fig. 12 is a diagram showing the winning combination lottery table and the award points thereof when a match-style game is performed.

In the slot machine 1 according to the embodiment, the winning combination, the points provided when the winning combination is obtained, and the slot machine to which the points are provided are correlated in the winning combination lottery table. The winning combination in the embodiment is configured so that a total of five types of winning combinations are present, and when a winning combination is won, award points are provided according to the particular winning combination.

The five types of winning combinations will be described. When the outcome "7-7-7 (red)" is won, three "red seven 94" symbols are stopped and displayed on the active pay line L, and "100" award points are provided. When the outcome "7-7-7 (blue)" is won, three "blue seven 97" symbols are stopped and displayed on the active pay line L. In the same manner, when the outcomes "triple bar," "double bar," and "single bar" are won, the symbols "triple bar 91," "double bar 93," and "single bar 95," are respectively stopped and displayed in threes of the same type on the active pay line L.

As shown in Fig. 12, the range of the random number used in the winning combination lottery table is 0 to 2047, and a random number value is assigned for each type of outcome (winning combinations and miss). A random number value is determined by the random number sampling circuit 56 described hereinafter, and the winning combination lottery table is referenced based on the random number value thus determined, whereby success or failure to win a winning combination is determined.

In the gaming system according to the embodiment, a different winning combination lottery table is provided for each slot machine 1 constituting the gaming system. Specifically, a winning combination lottery table (see Fig. 12 (a)) for the slot machine 1 on the red side (hereinafter referred to as slot machine (red)) is stored in slot machine (red), and a winning combination lottery table (see Fig. 12 (b)) for the slot machine 1 on the blue side (hereinafter referred to as slot machine (blue)) is stored in slot machine (blue).

The difference between the winning combination lottery table for slot machine (red) and the winning combination lottery table for slot machine (blue) will be described with reference to Figs. 12 (a) and 12 (b).

As shown in Figs. 12 (a) and 12 (b), the random number value range, the award points, and the object to which the points are provided are the same for the "triple bar" outcome, the "double bar" outcome, and the "single bar" outcome.

The difference between the winning combination lottery table for slot machine (red) and the winning combination lottery table for slot machine (blue) is in the "red seven" and "blue seven" outcomes.

As shown in Fig. 12 (a), in the winning combination lottery table for slot machine (red), the random number value range is 0 to 20 for the "red seven" outcome, and the object to which the points are provided is set to "player"; specifically, slot machine (red). For the "blue seven" outcome, the random number value range is 21 to 31, and the object to which the points are provided is set to "match opponent"; specifically, slot machine (blue).

Therefore, when a match-style game is performed in slot machine (red), when the value of the random number sampled by the random number sampling circuit 56 is in the range of 0 to 20, the "red seven" outcome is won, and 100 points are provided to the same slot machine 1. When the sampled random number value is 21 to 31, the "blue seven" outcome is won, but the object to which the points are provided is set to "match opponent" this time, so 100 points are provided to slot machine (blue), which is the match opponent.

As shown in Fig. 12 (b), when a match game is performed in slot machine (blue), when the value of the random number sampled by the random number sampling circuit 56 is in the range of 0 to 20, the "blue seven" outcome is won, and 100 points are provided to the same slot machine 1. When the sampled random number value is 21 to 31, the "red seven" outcome is won, but the points this time are provided to "match opponent," meaning that 100 points are provided to slot machine (red).

As described above, in the gaming system according to the embodiment, points corresponding to the winning combination can be acquired by a player who obtains a seven outcome having the same color as the slot machine he or she is using. When a seven outcome having a different color from that of the player's own slot machine is won, points are provided to the slot machine that corresponds to that outcome regardless of the player's own winning. Therefore, variability occurs in the process until the winner of the match-style game is determined, and variability also occurs in the match results.

A seven outcome having a different color from that of the player's slot machine will be referred to hereinafter as a "special outcome."

In the slot machine 1 according to the embodiment, the winning combination lottery table used during execution of the match-style game is described, but the slot machine 1 may also perform a normal game that is played independently.

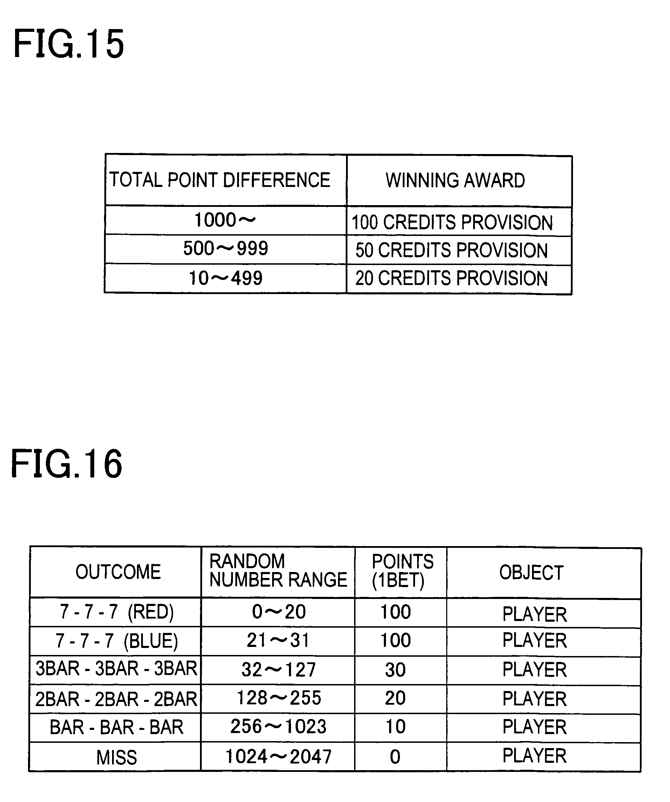

In the case of a normal game played by a player independently, the winning combination lottery table shown in Fig. 16 is used. Fig. 16 is a diagram showing the winning combination lottery table when a normal game is performed using slot machine (red).

As shown in Fig. 16, in the normal game, the "blue seven" outcome in which the object to which the points are provided is set to "match opponent" in the match game is changed so that points are provided to "player."

The object to which the points are provided is thus set to "player" for all outcomes, whereby the normal game can be smoothly executed.

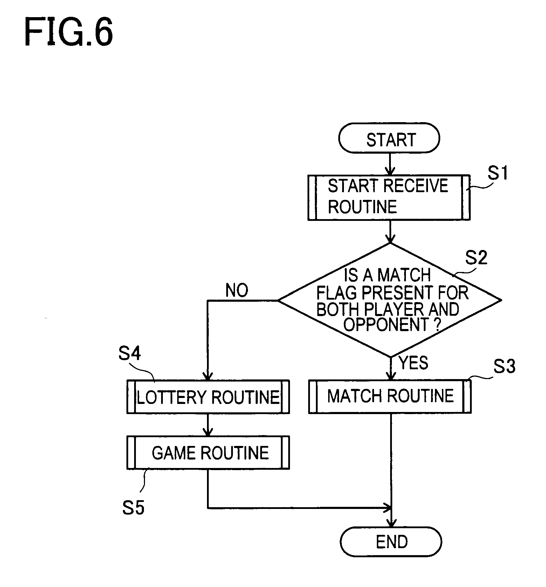

The main routine program executed in the slot machine 1 will be described based on Fig. 6. Fig. 6 is a flowchart of the main routine program. A case will be described in which slot machine (red) is used, but the same procedure applies when slot machine (blue) is used.

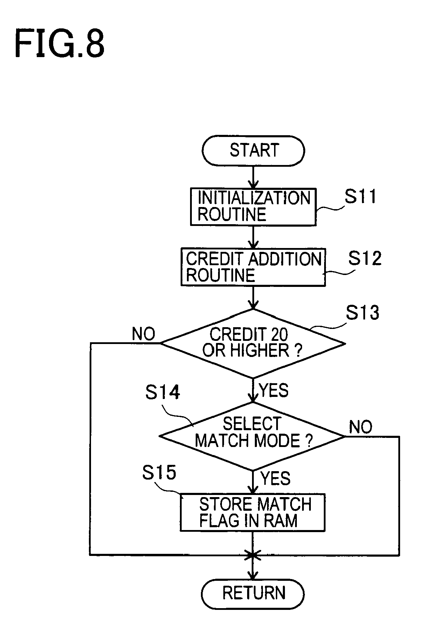

First, in step (hereinafter abbreviated "S") 1, the start receive routine of Fig. 8 described hereinafter is performed. In this start receive routine (S1), the coins that become the necessary credit for performing the game in the slot machine 1 are received, and selection of either the single-player normal game or the match game played by a plurality of players is performed for the game executed in the slot machine 1. The process proceeds to S2 after the start receive routine (S1) is completed.

In S2, it is determined in the player's own slot machine 1 (slot machine (red)) and in the match opponent's slot machine 1 (slot machine (blue)) whether a match flag is present in the RAM 52 that indicates the desire to execute a match game. At this time, whether a match flag is present in the RAM 52 of the match opponent's slot machine 1 is determined based on a signal transmitted from the match opponent's slot machine 1 by the communication routine program described hereinafter.

When a match flag is present in the player's own slot machine 1, and a match flag is also present in the match opponent's slot machine 1, since both players desire a match game, the process proceeds to the match routine (S3) for executing the match game.

In S3, the match game is performed, the match results between the slot machines 1 are determined, and the award is provided based on the match results. After these routines are completed, the main routine program is completed.

When one of the players has not selected the match game, or when one of the players has selected the match mode, but the opponent player has not selected the match mode (S2: NO), since a single-player normal game is executed, the process proceeds to S4. This normal game is a game in which players compete for the highest total number of points provided based on winning combinations.

In S4, a lottery of winning combinations in the single-player normal game is performed (S4). The reels R are stopped and displayed according to the lottery results, and adding of points and other game routines are performed (S5). After such routines (S4, S5) pertaining to this single-player normal game are completed, the main routine program is completed.

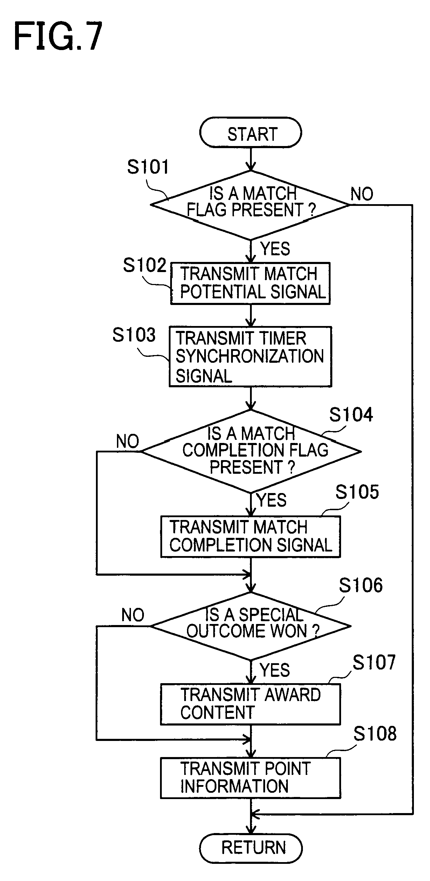

In the slot machine 1 according to the embodiment, mutual communication between the player's own slot machine 1 and the other slot machine 1 is performed via the communication device 90 during execution of the main routine program. The communication routine program according to communication control between these slot machines 1 will be described with reference to Fig. 7.

As previously described, execution of the communication routine program shown in Fig. 7 is initiated in the CPU 50 together with initiation of the main routine program, and is executed while interrupt processing with respect to the main routine program is performed at predetermined time intervals.

In the slot machine 1 according to the embodiment, signals from the other slot machine 1 are continually received via the communication device 90 and the received content is stored in the RAM 52 during execution of the communication routine program.

When the communication routine program is initiated, first, it is determined in S101 whether a match flag is present in the RAM 52. The match flag is a flag stored in the RAM 52 when a match game is desired in the start receive routine (S1); specifically, when the match button 10 is operated.

When a match flag is present in the RAM 52 of the slot machine 1 (S101: YES), the process proceeds to S102, and a match potential signal indicating that the slot machine 1 desires a match game is transmitted to the other slot machine 1 (S102).

Consequently, in the aforementioned S2, the presence of a match flag can be recognized on the match opponent side by receiving this match potential signal by means of the communication device 90.

When a match flag is not present in the RAM 52 of the slot machine 1 (S101: NO), execution of the communication routine program is completed without transmission of a match potential signal. And after a predetermined time interval elapses, the communication routine program is again executed.

In S103, a timer synchronization signal is transmitted with respect to all of the slot machines 1 constituting the gaming system 100. This timer synchronization signal is a signal for synchronizing the start of timing by the aforementioned timer 74. After the timer synchronization signal is transmitted to the other slot machine 1, the process proceeds to S104.

In S104, it is determined whether a match completion flag is present in the RAM 52 of the slot machine 1 executing the match game. The match completion flag is a flag stored in the RAM 52 so that the match game is ended when a predetermined condition is satisfied during the match game in this gaming system 100.

When a match completion flag is present in the RAM 52 (S104: YES), a match completion signal for generating a match completion flag is transmitted to the other slot machine 1 (S105). After the match completion signal is transmitted, the process proceeds to S106. When a match completion flag is not present (S104: NO), the process proceeds as it is to S106.

In S 105, the match completion signal transmitted to the other slot machine 1 is received by the other slot machine 1 that is constantly in a signal receiving state. The CPU 50 of the slot machine 1 that receives the match completion signal generates a match completion flag based on the match completion signal and stores the flag in the RAM 52.

In S106, it is determined whether a special outcome has been won. As described above, the "special outcome" is a seven outcome having a different color from that of the player's slot machine, and is an outcome for which the object to which the points are provided is set to "match opponent.

When a "special outcome" is won, specifically, when a special outcome flag described hereinafter is stored in the RAM 52 (S106: YES), award content is transmitted based on the winning combination lottery table so that the points corresponding to the special outcome are provided to the object, which is "match opponent" (S 107). After the award content is transmitted to the slot machine 1 of the match opponent, the process proceeds to S108. When the "special outcome" is not won (S106: NO), the process proceeds as it is to S108.

More specifically, in S106 according to the embodiment, a "special outcome" win is determined to have occurred when the "blue seven" outcome is won using slot machine (red), and award content for providing 100 points is transmitted to the match opponent slot machine (blue).

A "special outcome" win is determined to have occurred when the "red seven" outcome is won using slot machine (blue), and award content for providing 100 points is transmitted to the match opponent slot machine (red).

In S108, the point information according to total points obtained during the match game by the player's slot machine is transmitted to the other slot machine joining in the match game.

Based on that the above point information is transmitted and received among the slot machines 1 joining in the match game together, the player's point information and the match opponent's point information are displayed on the liquid crystal display 4 of the slot machine 1. And after the match game is completed, by referring the point information of the players joining the match game, the winner determination of the match game is performed. After the point information is transmitted to the slot machines 1 joining in the match game, the communication routine program is completed. After a predetermined time elapses from this completion, the communication routine program is again executed while interrupt processing with respect to the main routine program is performed.

In the slot machine 1 constituting the gaming system 100 of the embodiment thus configured, the communication routine program mentioned above is executed while interrupt processing with respect to the main routine program is performed at predetermined time intervals. By this arrangement, comfortable gaming can be provided without time discrepancies between players occurring in the initiation and progress of the match game.

Each routine constituting the main routine program will be described in sequence with reference to the drawings. The start receive routine (S1) of the main routine program will first be described with reference to Fig. 8.

When execution of the main routine program is initiated, and the process proceeds to the start receive routine (S1), clearing of the RAM 52 and other initialization routines (S11) are first performed.

After the initialization routine (S11) is completed, the credit addition routine (S12) is performed in S12. In the credit addition routine (S12), the coins inserted from the coin insertion slot 9 are detected by the coin detector 73, and the number of credits is increased according to the number of coins inserted. Credit is spent by making any bet on the active pay line L during a single-player normal game and a match-style game.

After the credit addition routine (S12) is completed, it is determined in S13 whether the current number of credits is 20 or higher. In the gaming system according to the embodiment, the number of credits must be 20 or higher in order to execute a match game. By setting a credit number of 20 or higher as a condition in this manner, a match game can be prevented from ending in a short time, and the match game can be enjoyed for a certain period of time.

When the current number of credits is 20 or higher (S13: YES), the input of the match button 10 is enabled, and the process proceeds to S14. At this time, it becomes possible for the player to select a single-player normal game or a match-style game.

When the number of credits is 20 or lower (S13: NO), the start receive routine (S1) is ended with the input of the match button 10 disabled. Consequently, in this case, use of the slot machine 1 is limited to the single-player normal game.

In S14, which occurs when the number of credits is 20 or higher, it is determined whether a match mode is selected. Specifically, this determination is made based on whether there is an input from the match button 10, and when there is an input from the match button 10 (S14: YES), the CPU 50 generates a match flag and stores it in the RAM 52 (S15). After the match flag is stored in the RAM 52, the start receive routine (S1) is completed, and the process proceeds to S2.

When there is no input from the match button 10 (S14: NO), it is determined that the player desires a single-player normal game, the start receive routine (S1) is completed without generation of a match flag, and the process proceeds to S2.

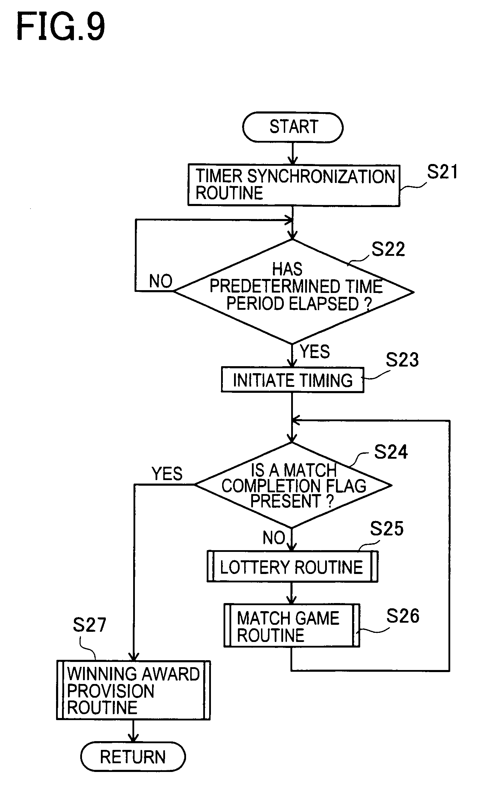

The match routine program will next be described with reference to Fig. 9. This match routine program is a program executed in the match routine (S3), performed when there is a plurality of players who desire a match game.

When the process proceeds to the match routine (S3), the timer 74 synchronization routine in S21 is first performed. In the timer synchronization routine (S21), a routine is performed for synchronizing the start of timing by the timer 74 between the slot machines 1 performing the match game based on the timer synchronization signal received in the aforementioned communication routine program. Specifically, the timer synchronization signal transmitted from the match opponent slot machine 1 is compared with the players own timer 74 data, and the time difference between the two machines is determined. The start of timing by both timers 74 is synchronized by causing processing to wait according to the time difference of whichever timer 74 is ahead.

In S22, processing is put on standby according to the time difference derived from the timer synchronization signal, as described previously. Therefore, in S22, processing is put on standby for a predetermined time according to the time difference only when the timer 74 is ahead.

When the predetermined time has elapsed, and the timers 74 of the slot machines 1 performing the match game are synchronized, measurement of the match game time limit (three minutes, for example) is initiated (S23).

In the present embodiment, the timer 74 is synchronized by causing processing to stand by according to the time difference, but the timer 74 may also be synchronized by simultaneously resetting both the timers 74.

In S24, it is determined whether a match completion flag is present. The match completion flag is a flag stored in the RAM 52 based on a match completion condition monitoring program described hereinafter. When a match completion flag is present (S24: YES), the process proceeds to the winning award provision routine (S27), and the match game is completed. When there is no match completion flag (S24: NO), the process proceeds to S25, and the match game is continued.

In S25, the lottery routine is performed. In the lottery routine (S25), the player determines the bet amount of one game constituting the match game, and a lottery of the outcome of that game is performed. This lottery routine will be described in detail hereinafter with reference to the drawings.

After the lottery routine (S25) is completed, the process proceeds to the match game routine (S26). The match game routine is a routine for initiating rotation of the reels R, controlling stoppage thereof based on the lottery results in S25, computing points based on a winning combination, and performing other tasks. This match game routine will be described hereinafter with reference to the drawings.

After the match game routine (S26) is completed, the process returns to S24, and the match game is continued.

As previously described, when a match completion flag is present (S24: YES), the process proceeds to the winning award provision routine (S27). This winning award provision routine (S27) is a routine for comparing the number of points between the slot machines 1 that performed the match game, and providing an award to the winner having the most points according to the number of points acquired. This winning award provision routine will be described in detail hereinafter with reference to the drawings.

After the winning award provision routine (S27) is completed, the match routine program ends, and the process returns to the main routine program.

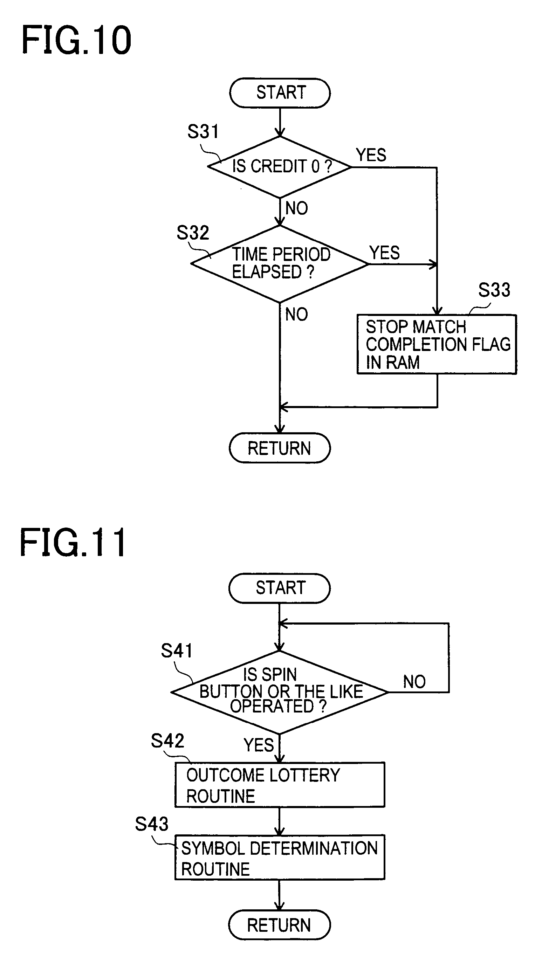

In the slot machine 1 according to the embodiment thus configured, a plurality of programs are executed while interrupt processing with respect to the match routine program is performed at predetermined time intervals. The match completion condition monitoring program, which is one of the abovementioned plurality of programs and which relates to completion of the match routine program, will be described with reference to Fig. 10.

The match game according to the embodiment is forced to end when any one of two conditions is satisfied. The ending conditions for the match game are the following two conditions: "the number of credits in any one of the slot machines 1 participating in the match game becomes zero," and "the time limit (three minutes) of the match game has elapsed."

By this match completion condition monitoring program, the slot machine 1 is monitored whether any of the abovementioned two conditions is satisfied during a match game.

Therefore, the process proceeds to the match routine (S3), execution of the match completion condition monitoring program is initiated by the CPU 50, and processing is performed at predetermined time intervals. First, in S31, it is determined whether the number of credits of the slot machine 1 is zero. When the number of credits is not zero (S31: NO), the process proceeds to S32. In S32, it is determined whether the time period elapsed since the start of the match game has reached the time limit (three minutes in the embodiment). When the results of referencing the timer 74 show that the time limit has not elapsed (S32: NO), the process returns to S31 and the above processes are repeated till the match game is completed.

When the number of credits of the slot machine 1 has reached zero (S31: YES), or in the subsequent S33 to which the process proceeds when the predetermined time (three minutes) has elapsed (S32: YES), the CPU 50 generates a match completion flag based on the match completion condition being satisfied, and stores the match completion flag in the RAM 52.

After the match completion flag is stored in the RAM 52 (S33), the match game and the match completion condition monitoring program are both ended.

As described above, the match completion flag generated by the match completion condition monitoring program is used in S24 during the match routine, and leads the slot machine 1 towards the routine relating to completion of the match game.

The lottery routine program executed in the lottery routine (S25) in the match routine program (see Fig. 9) will first be described with reference to Fig. 11.

In the lottery routine program as shown in Fig. 11, first, in S41, it is determined whether the spin button 12 or the like has been operated. In other words, in S41, the player performs the operation for determining the number of credits bet with respect to the active pay line L using the 1-BET button 11, the MAX-BET button 13, and the like, and performs the operation for initiating rotation of the reels R by the input of the spin button 12.

When the spin button 12 or the like is not operated (S41: NO), processing stands by until the spin button 12 or the like is operated. When the spin button 12 or the like is operated, the bet amount with respect to the active pay line L is determined, and the operation for initiating rotation of the reels R is performed (S41: YES), the process proceeds to S42 and the lottery of winning combination in the present game is executed.

In the outcome lottery routine (S42), the lottery of outcomes is performed using the winning combination lottery table shown in Figs. 12 (a), 12 (b) and the random number sampling circuit 56. Specifically, it is determined to which random number range corresponding to each outcome of the winning combination lottery table (see Figs. 12 (a), 12 (b)) a random number sampled by the random number generator 55 and the random number sampling circuit 56 belongs, and the lottery results are determined based on this determination.

In S43, a symbol determination routine is performed for determining how the combination of symbols constituting the winning combination determined by the outcome lottery routine (S42) is formed from the symbols formed on the peripheral faces of the reels R. When a winning combination is won, all the same symbols are stopped and displayed. Therefore, when a "miss" is selected, at least one of the symbols stopped on the active pay line L in the reels R is different from the others.

At this time, there is no case in which the stopped and displayed symbols consist only of a mixture of "red seven 94" and "blue seven 97." In other words, there is no stopped display such as "red seven 94," "red seven 94," and "blue seven 97" on the active pay line L, which appears as if a seven outcome is won. This is to prevent the player from confusing such an outcome with a winning combination of "sevens."

After the symbol determination routine (S43) is completed, the lottery routine program is ended, and the process proceeds to S26 of the match routine program.

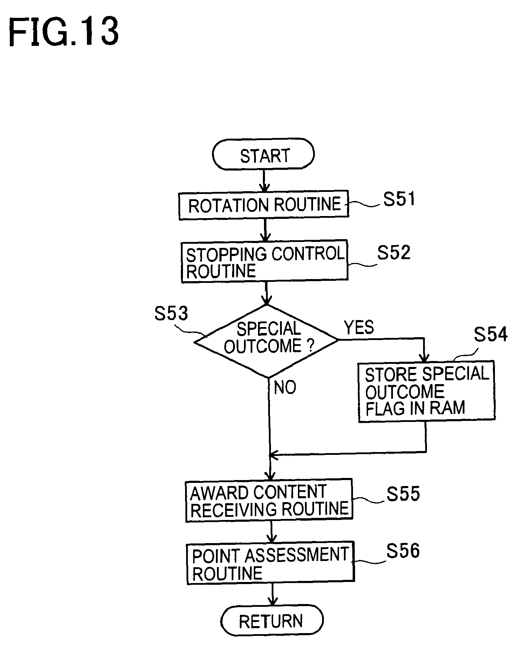

The match game routine program executed in S26 of the match routine program will be described with reference to Fig. 13.

When the transition to the match game routine program is made, first, in S51, the rotation routine for initiating rotation of the reels R is performed. After the reels R have been rotated for a certain period of time, a stopping control routine (S52) for stopping the symbol determined in the symbol determination routine (S43) on the active pay line is performed. After the stopping control routine (S52) is finished, the process proceeds to S53.

In S53, it is determined whether a "special outcome" has been won. Specifically, it is determined in the case of slot machine (red) whether the outcome "blue seven" has occurred, and in the case of slot machine (blue), whether the outcome "red seven" has occurred. In other words, such determination is performed based on whether or not the random number value sampled in the outcome lottery routine (S42) lies in a range of 21 ~ 31.

When a "special outcome" has occurred (S53: YES), the process proceeds to S54, a special outcome award flag indicating the winning of a "special outcome" is generated, and the flag is stored in the RAM 52 (S54). Since this special outcome award flag is stored in the RAM 52, it is determined that a special outcome has been won in the routine of S106 in the aforementioned communication routine program, and award content corresponding to the special outcome is transmitted to the other slot machine 1 (S107). After the special outcome award flag is stored in the RAM 52, the process proceeds to S55.

When "special outcome" is not won (S53: NO), the process proceeds as such to S55.

In S55, the award content receiving routine is performed. In the award content receiving routine, the "special outcome" award " 100 points" is added to the points that are to be added to the points of the slot machine 1 based on the reception results of the award content transmitted in S107 of the aforementioned communication routine program.

In S56, the point assessment routine (S56) is performed for adding the sum of the points relating to the "special outcome" added in S55 and the points added based on the lottery results in the player's own slot machine 1 to the current number of points obtained in the player's own slot machine 1. After the point assessment routine (S56) is completed, the match game routine (S26) is ended, and the process returns to the match routine program.

Concretely describing on the basis of an example, in a case that the slot machine 1 of the match opponent is the slot machine (blue) and the "red seven" outcome is won (S53: YES), as the award content, it is transmitted to the player's won slot machine (red) the award content to give 100 points thereto (S54). At that time, in the player's own slot machine 1 (red), if the winning combination of "3BAR" is won, the slot machine 1 (red) receives the award content (signal to give 100 points) from the slot machine (blue) (S55), and such 100 points given from the other slot machine 1 as the award content and 30 points of the winning combination of "3BAR" are added to the total points obtained at present (S56).

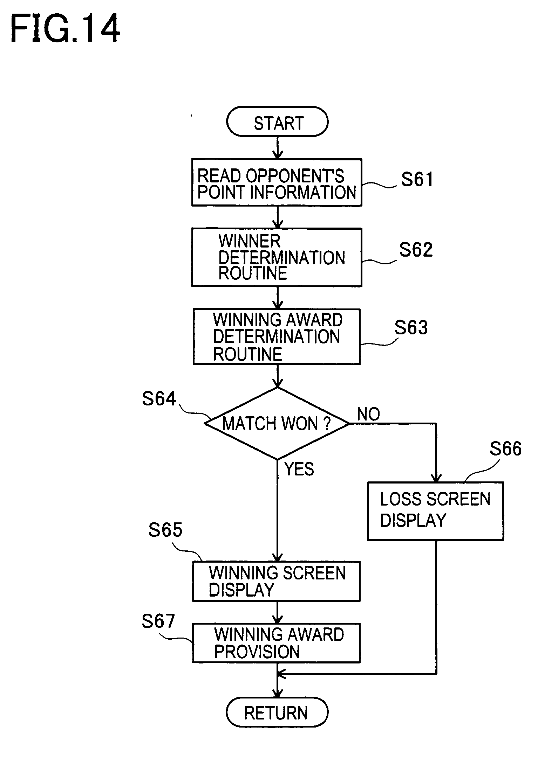

The winning award provision routine program executed in the winning award provision routine (S27) performed at the end of the match game in the match routine program will next be described with reference to Fig. 14.

When the transition to the winning award provision routine (S27) is made, first, in S61, the point information of the opponent is read, which is the information transmitted in S108 of the communication routine program and stored in the RAM 52 of the slot machine 1. The winner determination routine (S62) for determining the winner of the match game is then performed by comparing the point information of the player with the point information of the opponent read from the RAM 52, and computing the difference between the opponent's points and the player's points.

In S63, the content of the award paid out to the winner is determined based on the results of the winner determination routine (S62) and the winning award determination table (see Fig. 15).

The winning award determination table will be described. Credit is provided to the winner of the match game in the gaming system according to the embodiment. The credit thus provided also varies according to the point difference between the player and the match opponent.

As shown in Fig. 15, 100 is added to the number of credits of the winning slot machine 1 when the point difference between the participants in the match game is 1000 points or greater. Therefore, by operating the payout button 7 at the end of the game, coins are paid out according to the amount of credit remaining. When the point difference between the participants in the match game is 500 points or greater and less than 1000 points, 50 is added to the number of credits of the winning slot machine 1. When the point difference between players is 10 points or greater and less than 500 points, 20 is added to the number of credits of the winning slot machine 1.

After the content of the winning award provided to the winner is determined according to the point difference between the participants in the match game in this manner, the process proceeds to S64.

In S64, it is determined whether the slot machine 1 won the match. In other words, a determination is made based on the determination result of the winner determination routine (S62) for determining whether the player has more points compared with the match opponent's points.

When the slot machine 1 is defeated (S64: NO), a message indicating loss of the match is displayed on the liquid crystal display 4, and the loss is reported to the player (S66). When the slot machine 1 wins (S64: YES), a celebration message indicating a win is displayed on the liquid crystal display 4 (S65). After the winning screen is displayed on the liquid crystal display 4, the winning award determined in the winning award determination routine (S63) is added to the player's credit (S67).

After the winning award is provided (S67), both the winning award provision routine program and the match routine program are ended.

In the gaming system according to the embodiment, not only can the aforementioned match-style game be played, but a single-player normal game can also be played. The processing relating to the single-player normal game will be described herein with reference to the drawings.

As previously described, a single-player normal game is performed when the player of the slot machine 1 does not desire a match game in the slot machine 1 according to the embodiment, or when the player of the slot machine 1 desires a match game, but there is no other player present who desires to participate in a match game as the match opponent (S2: NO).

In this situation, the process first proceeds to the lottery routine (S4). Since this outcome lottery routine performs basically the same control as the previously described lottery routine (see Fig. 11) of S25 in the match routine program, detailed description thereof is omitted. This lottery routine (S4) differs from the lottery routine (S25) in the match routine program in the winning combination lottery table used in the outcome lottery routine. The winning combination lottery table used in the lottery routine (S4) is different form the table shown in Figs. 12 (a), 12 (b) which is used in the match game, the winning combination lottery table used in the lottery routine (S4). In the winning combination lottery table, the object to be provided with points for all outcomes is set to "player" (see Fig. 16).

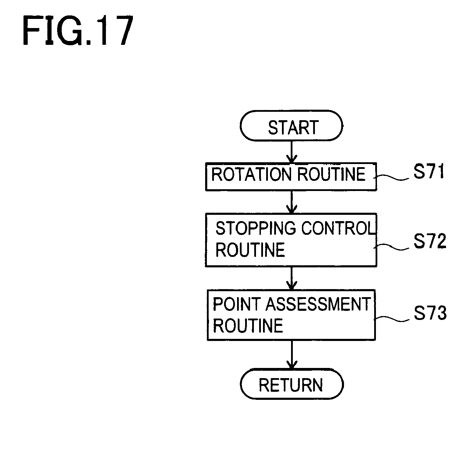

After the bet amount for the active pay line L, the outcome in the current game, and the symbol constituting the outcome are determined by the lottery routine (S4), the game routine is performed in S5. The game routine (S5) in the single-player normal game will be described with reference to Fig. 17.

When the transition is made to the game routine in the single-player normal game, first, in S71, the rotation routine for initiating rotation of the reels R is performed. After rotation of the reels R is initiated, and a predetermined period of time has elapsed, a stopping control routine (S72) is performed for stopping the outcome determined as a result of the lottery routine (S4), and the symbols constituting the outcome, on the active pay line L.

After the stopping control routine (S72) is finished, the points provided to the slot machine 1 are read based on the winning combination lottery table (see Fig. 16) and the outcome determined in the lottery routine (S4), and the point assessment routine (S73) is performed for adding the points thus read to the slot machine's current points. After the point assessment routine (S73) is completed, the game routine (S5) is completed, and the single-player normal game is ended.

As described above, in the gaming system 100 according to the embodiment, when a match game is executed using the slot machines 1 constituting gaming system 100, and the "special outcome" is won, points according to the special outcome are not given to the player's own slot machine 1 but are given to the match opponent. Concretely describing, in a case that the match is conducted using the slot machine 1 (red) and the "blue seven" outcome which is the special outcome is won, points are not given to the player's own slot machine (red) but are given to the slot machine (blue) which is the match opponent.

As described, based on that points obtained according to that the winning combination is won and the object to which such points are given are determined corresponding to the winning combination, it will occur variability that the game result becomes advantageous or disadvantageous. As a result, variability concerning with victory or defeat of the match will occur, therefore not only skillful player but also skill-less player can enjoy interest of the match.

The present invention is in no way limited by the embodiment described above, and may include various modifications in ranges that do not depart from the intended scope thereof.

For example, a case is described in the above embodiment in which the gaming system 100 is composed of two slot machines 1, but the gaming system 100 may be formed using numerous slot machines 1.

In this case, based on that "seven" outcome with color corresponding to each of the slot machines is added to the winning combination lottery table, the match game similar to the match game according to the embodiment can be conducted over plural slot machines. For example, in addition to the symbols of "red seven" and "blue seven", symbols of "yellow seven" and "green seven" are added to each of the reels R, and further outcomes of "yellow seven" and "green seven" are added as the special outcome to the winning combination lottery table, thereby the match game can be conducted over four slot machines 1 of "red", "blue", "yellow" and "green".

The match game described in the abovementioned embodiment is one in which a slot machine 1 and another slot machine 1 compete with each other one at a time, but teams of each color of slot machine 1 may also be formed, and a match game may be played between teams.

In the embodiment, the object to which points of "special outcome" is directed to a slot machine 1 such as the slot machine (red) or the slot machine (blue). However, points may be given to all of the other slot machines participating in the match game except for the player's own slot machine 1. Thereby, new interest can be given to the match game.

In the embodiment, although the color indicating the slot machine 1 is set beforehand to each of the slot machines 1, such color indicating the player's won slot machine may be selected after process proceeds to the match game. Thereby, the player can conduct the match game using the favorite color.

Direct communication between slot machines 1 is performed by the communication device 90 provided to the slot machine 1 in the abovementioned embodiments, but a server may be provided between the communication device 90 of the slot machine 1 and the communication device 90 of the other slot machine 1, and indirect communication may be performed between slot machines 1 via the server. By this arrangement, a match game can be performed smoothly with no communication failures even when the gaming system 100 is composed of a large number of slot machines 1.

The gaming system is composed of so-called slot machines in the abovementioned embodiments, but the gaming system may also be composed of slot machines having a stop button. Specifically, no drawbacks are presented by a system composed of slot machines in which the rotating reels R are stopped based on the operation of a stop button.

The scope of the present invention also includes a gaming system having any combination of the elements of the gaming system according to the embodiments described above.

## Claims

1. A gaming system comprising a plurality of gaming machines, each of the gaming machines comprising:
a communication device for communicating with another gaming machine constructing the gaming system;
a lottery device for conducting a lottery of an outcome in which an award and an object gaming machine to which the award is given are corresponded; and
a game control device for giving the award to the object gaming machine based on a lottery result by the lottery device.

2. The gaming system according to claim 1, wherein the outcome includes a first outcome for giving the award to the gaming machine and a second outcome for giving the award to another gaming machine other than the gaming machine; and
wherein the game control device gives the award relating to the first outcome to the gaming machine when the first outcome is won by the lottery device and transmits an award giving signal for giving the award relating to the second outcome to another gaming machine via the communication device when the second outcome is won.

3. The gaming system according to claim 2, wherein the game control device gives the award relating to the second outcome to another gaming machine based on receipt of the award giving signal by the communication device.

4. The gaming system according to claim 1, wherein a switch for selecting a match game conducted with another gaming machine is provided in the gaming machine.

5. The gaming system according to claim 4, further comprising:
a first timer provided in the gaming machine; and
a second timer provided in another gaming machine;
wherein both the first timer and the second timer start to simultaneously measure a predetermined time in synchronous fashion when the match game is conducted between the gaming machine and another gaming machine.

6. A gaming machine utilized in the gaming system according to claim 1.

7. The gaming system according to claim 2, wherein the first outcome constructed from symbols colored in a first color and the second outcome is constructed from symbols colored in a second color, and
wherein the gaming machine is colored in the first color corresponding to the symbols of the first outcome and another gaming machine is colored in the second color corresponding to the symbols of the second outcome.
